# EUROPEAN PATENT APPLICATION

(11) **EP 0 780 610 A2**
(43) Date of publication of application: **25.06.1997**
(21) Application number: 96118020.5
(22) Date of filing: 11.11.1996
(51) Int. Cl.: F16K 1/228

(54) **Method and apparatus for controlling a collapsible seal for a butterfly valve**

(30) Priority: 21.11.1995 US 560260
(71) Applicant: AlliedSignal Incorporated, Morristown, New Jersey 07962 (US)
(72) Inventor: Ball, Larry K., Alliedsignal Inc., Morristown, New Jersey 07962 (US); Dumas, Steven B., Alliedsignal Inc., Morristown, New Jersey 07962 (US); Jorgensen, Daniel R., Alliedsignal Inc., Morristown, New Jersey 07962 (US); Palmer, Daniel A., Alliedsignal Inc., Morristown, New Jersey 07962 (US); Schipae, Richard J., Alliedsignal Inc., Morristown, New Jersey 07962 (US); Tervo, John N., Alliedsignal Inc., Morristown, New Jersey 07962 (US)
(74) Representative: Poidatz, Emmanuel

(57) **Abstract**

A control system for a butterfly valve having a collapsible seal coordinates the expansion and activation of the seal with the movement of the valve member. When the valve is to open, the control system initially collapses the seal prior to moving the valve member. When the seal has expanded and disengaged the valve member, the valve member moves to the open position. Conversely, when the valve member pivots to the closed position, the seal remains expanded until the valve member is completely closed, at which point the seal is reactivated to engage the valve member.

## Description

### BACKGROUND OF THE INVENTION

### 1. Field of the Invention

The invention relates to control systems for flow control valves, and more particularly, to controls for seals for butterfly valves.

### 2. Description of the Related Art

The valve member of a butterfly valve must achieve a sealing tight fit with the walls of the surrounding duct. Typically, the plate-like butterfly valve member includes a seal member at its outer periphery. This seal member, such as a piston ring type, o-ring, or lip seal, is resiliently and sealingly engageable with the duct wall in the closed position of the valve member.

To open the butterfly valve, an initial torque must be applied to the valve member to overcome the friction with the seal and "crack open" the valve member. Similarly, to close the valve member, a final torque must be applied to the valve member to overcome the friction of the seal. Not only does this require added torque from the actuator, but contributes to rapid degradation of the seal and surrounding duct due to wear.

A collapsible seal substantially eliminates the problem of wear by expanding the seal away from the valve member before the valve member is moved to the open position. Similarly, to close the valve, the valve member is first rotated to the closed position, and only then does the seal engage the valve member. The activation and expansion of the collapsible seal, however, must be controlled in relation to the movement of the valve member for proper operation.

It is therefore an object of this invention to provide a control logic system for activating and expanding a collapsible seal in conjunction with the valve member of a butterfly valve.

### SUMMARY OF THE INVENTION

A method and apparatus for sealing a butterfly valve according to various aspects of the present invention provides a system for expanding and securing a seal in conjunction with opening and closing a valve. In particular, an exemplary embodiment includes providing a "dead band" in which the valve member momentarily remains in the closed position while the seal expands. Conversely, the seal remains expanded momentarily while the valve member pivots from the open position to the closed position. At the end of the dead band, the seal is again secured around the valve member to form a seal. The system for sealing the butterfly valve may be implemented using a mechanical control system.

### BRIEF DESCRIPTION OF THE DRAWINGS

The subject matter of the invention is particularly pointed out and distinctly claimed in the concluding portion of the specification. The invention, however, both as to organization and method of operation, may best be understood by reference to the following description taken in conjunction with the claims and the accompanying drawing, in which:
**Figure 1** illustrates a longitudinal cross-section of a butterfly valve in the closed position;
**Figure 2** illustrates a downstream elevational view of the butterfly valve of Figure 1;
**Figure 3** illustrates a longitudinal cross-section of the butterfly valve of Figure 1 in the open position;
**Figures 4A-C** illustrate longitudinal cross-sections of the sealing ring in relation to the valve member of the butterfly valve of Figure 1 in the closed and open positions, respectively, and having alternative seals;
**Figure 4D** illustrates a longitudinal cross-section of the sealing ring in relation to the valve member of the butterfly valve of Figure 1 in the closed position prior to engagement of the sealing ring;
**Figure 5** is a transverse cross-section of the duct of the butterfly valve of Figure 1;
**Figures 6A-B** are transverse cross-sections of the duct of Figure 5 with the sealing ring in the closed and open positions, respectively;
**Figure 7** is a flow chart of the process for controlling the butterfly valve of Figure 1; and
**Figure 8** is a cross section of an exemplary mechanism for implementing the process of Figure 7.

### DETAILED DESCRIPTION OF PREFERRED EXEMPLARY EMBODIMENTS

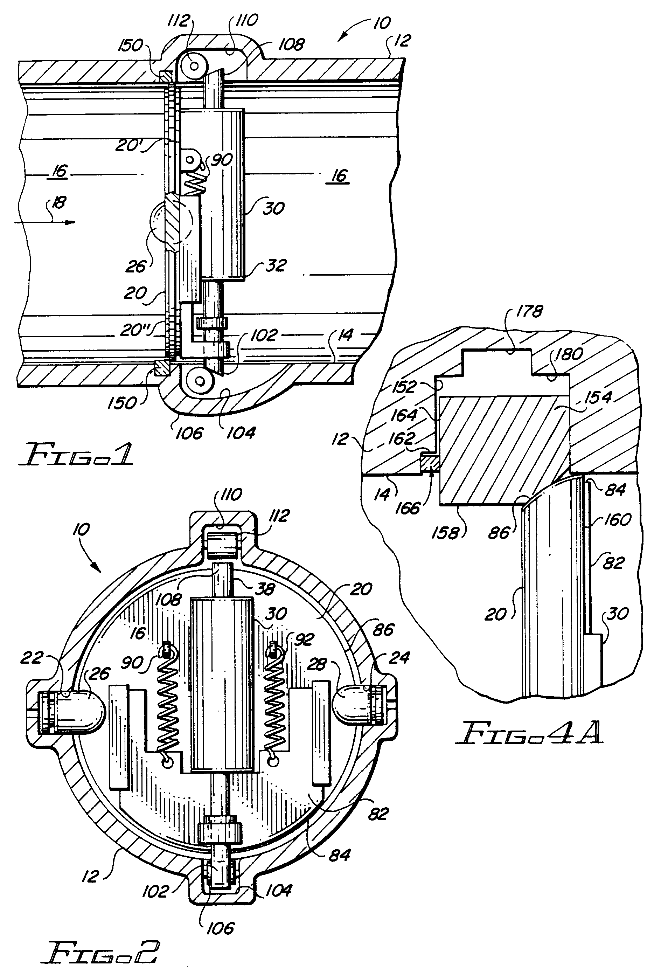

An appropriate butterfly valve for use in conjunction with the present invention is disclosed in U.S. Patent Application Serial No. 08/560,751 filed November 21, 1995 by Larry K. Ball, Richard J. Schipae, Steven B. Dumas, Daniel A. Palmer, Daniel A. Jorgensen, Rondel W. Osborn, and John N. Tervo, entitled BUTTERFLY VALVE HAVING A COLLAPSIBLE SEAL, which is hereby incorporated by reference. Referring now to Figures 1, 2, and 3, a butterfly valve 10 according to various aspects of the present invention comprises: a flow path 16 defined by an interior surface 14; a valve member 20 disposed within interior surface 14; and a collapsible seal 150 disposed within interior surface 14 and around valve member 20. Interior surface 14 is suitably defined by an elongate circumferentially extending wall, such as a duct 12 or pipe. Interior surface 14 bounds flow path 16 in which a fluid may flow, as depicted by arrow 18.

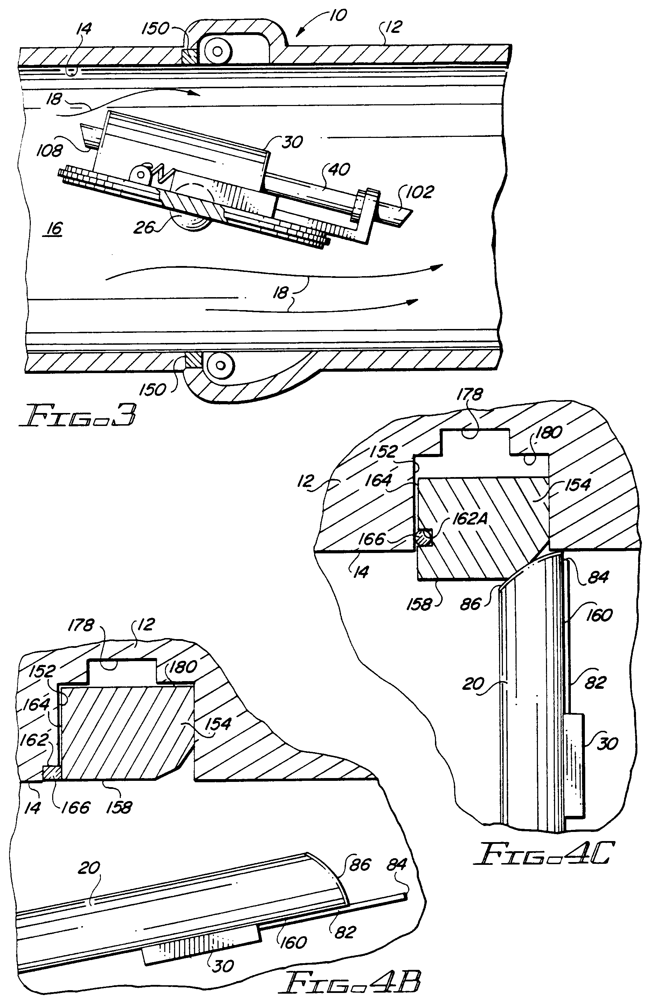

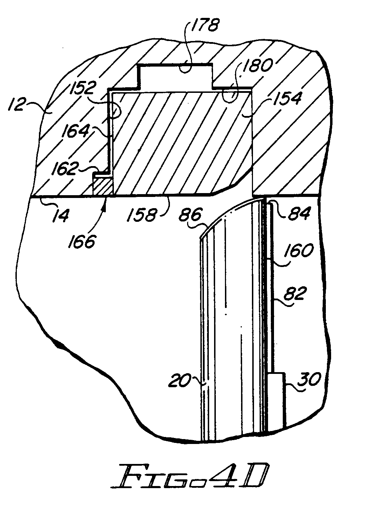

Valve member 20 is disposed within flow path 16 in duct 12 to facilitate fluid flow control. Valve member 20 suitably includes any type of valve member that selectively restricts fluid flow in duct 12. For example, valve member 20 may comprise a rigid, plate-like member conforming to the shape of duct 12. Valve member 20 is preferably relatively thin to present a narrow profile to fluid flow when valve 10 is open. Valve member 20 is movably mounted within duct 12 so that, in a first position, valve member 20 is disposed transversely across flow path 16 to form a barrier across the duct to inhibit fluid flow (Figure 1). Valve member 20 suitably pivots about an axis to a second position, approximately parallel to flow path, to facilitate the flow of fluid through duct 12 (Figure 3). Preferably, static fluid forces in flow path 16 bias valve member 20 towards the closed position.

Referring now to Figure 2, interior surface 14 of duct 12 defines a pair of transversely aligned inwardly opening sockets 22, 24, while valve member 20 includes a pair of trunnions 26, 28 sealingly and freely rotatably received in sockets 22, 24. Consequently, valve member 20 may rotate substantially freely on the axis defined by sockets 22, 24 and trunnions 26, 28. It should be noted that, although the axis of rotation shown in Figures 1 and 3 is orthogonal to flow path, axis of rotation may be disposed at an angle across duct 12 so that a socket 22 and a trunnion 26 are positioned upstream from the opposing socket 24 and trunnion 28.

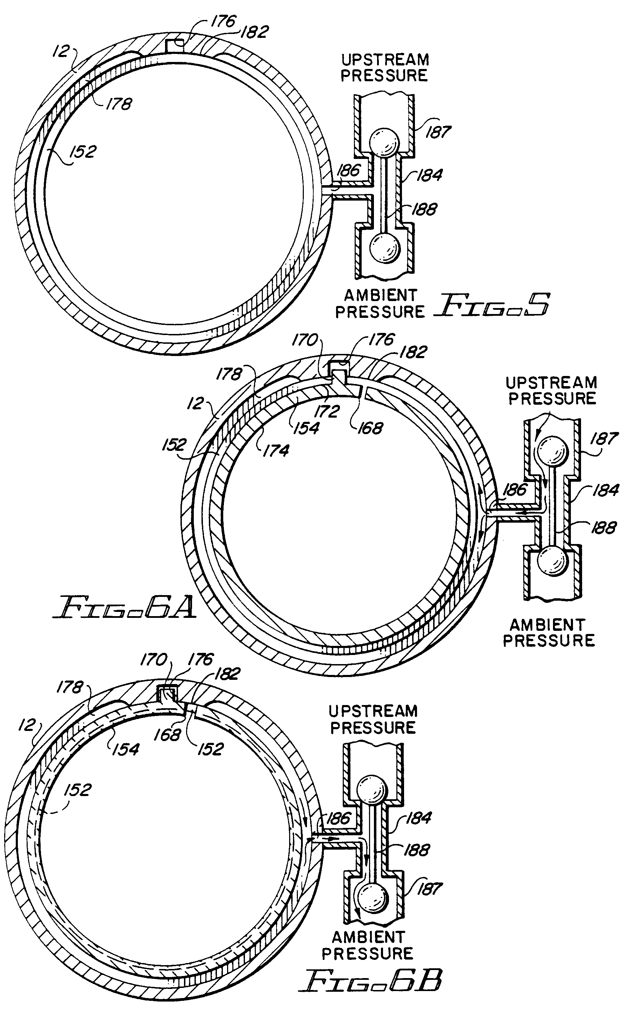

Referring now to Figures 4A-B, interior surface 14 of duct 12 defines a circumferential sealing member groove 152 around the outer perimeter 86 of valve member 20. Sealing member groove 152 is sized to securely receive a sealing ring 154 so that sealing ring 154 is movable radially with respect to the longitudinal axis of duct 12. Sealing ring 154 includes a member conformed to the shape of interior surface 14 and sealing member groove 152, e.g. a ring. Sealing ring 154 is made from any suitable material for forming a seal with valve member 20, especially in high temperature applications, e.g. a high cobalt alloy. The sealing ring 154 is movably seated within sealing member groove 152. In the contracted position, sealing ring 154 has a cross-sectional height sufficient to contract around outer perimeter 86 of valve member 20 and remain seated within sealing member groove 152. In the expanded position, sealing ring 154 may partially extend beyond interior surface 14 and protrude into flow path 16. Alternatively, sealing ring 154 suitably has a cross-sectional height slightly less than the depth of sealing member groove 152 so that an interior surface 158 of sealing ring 154 is flush with or below interior surface 14 of duct 12. In addition, the cross-sectional width of sealing ring 154 is slightly less than the width of sealing member groove 152 to facilitate radial movement of sealing ring 154.

The interior surface 158 of sealing ring 154 may be configured to mate with outer perimeter surface 86 of valve member 20. For example, a portion of interior surface 158 may be beveled to conform with the shape of the outer perimeter 86 of valve member 20. Conformed interior surface 158 provides a contact surface between sealing ring 154 and valve member 20. In addition, sealing ring 154 is positioned, and interior surface 158 is conformed, so that sealing ring 154 contacts valve member 20 away from the downstream side 160 of sealing ring 154 and nearer the center of sealing ring 154.

Referring to Figures 4A-B, duct 12 includes at least one seal groove formed in the side surface of sealing member groove 152. A seal member, such as a wire 166, is disposed within seal groove 162 to form the seal between sealing ring 154 and sealing member groove 152. Preferably, the seal member has a square cross-section, and is composed of a material capable of withstanding high temperatures without deterioration. Alternatively, sealing ring 154 may include an annular seal groove 162A formed on the side surface of sealing ring 154 (Figure 4C). Seal groove 162A is located sufficiently away from interior surface 158 of sealing ring 154 so that wire 166 continuously remains in contact with sealing member groove 152 regardless of the position of sealing ring 154. A second seal groove and wire seal may also be incorporated into the downstream side of sealing ring 154 to enhance the seal between flow path 16 and sealing member groove 152 (not shown).

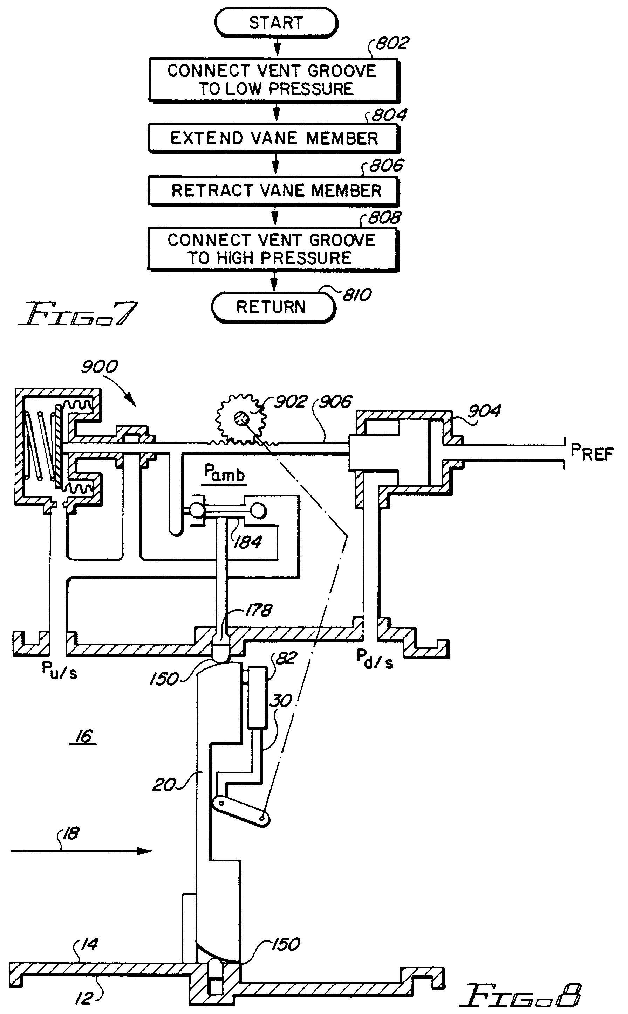

Sealing ring 154 is pliant to facilitate contraction to secure sealing ring 154 around valve member 20 and expansion away from valve member 20. As shown in Figures 6A-B, sealing ring 154 suitably includes a narrow butt gap 168 to permit expansion of sealing ring 154 in response to a force applied to interior surface 158 of sealing ring 154. Sealing ring 154 is suitably biased to contract, i.e., unless sealing ring 154 is forced outward, it contracts around perimeter 86 of valve member 20.

In addition, sealing ring 154 includes a positioning peg 170 rigidly attached to an outer surface 172 of sealing ring 154. Interior surface 174 of sealing member groove 152 suitably forms a peg recess 176 for receiving positioning peg 170. Positioning peg 170 is received within peg recess 176 to maintain the orientation of sealing ring 154 with respect to duct 12. Peg recess 176 is suitably sized to snugly receive positioning peg 170 of sealing ring 154, and is deep enough to facilitate movement of positioning peg 170 radially from the longitudinal axis of duct 12 as sealing ring 154 contracts and expands to engage and disengage valve member 20.

Referring again to Figures 5 and 6A-B, interior surface 14 of duct 12 also defines a vent groove 178 formed in a surface 180 of sealing member groove 152 parallel to the longitudinal axis of duct 12 and concentrically with sealing member groove 152. Vent groove 178 is suitably narrower than the cross-sectional width of sealing ring 154 so that sealing ring 154 cannot enter vent groove 178. Vent groove 178 may be circumferential around sealing member groove 152. Preferably, however, vent groove 178 is not completely circumferential, and instead circumscribes less than the full circumference of sealing member groove 152 to form a vent groove gap 182 in the circumference of vent groove 178. Peg recess 176 is formed in the surface of duct 12 in vent groove gap 182. Positioning peg 170 and butt gap 168 are suitably situated on sealing ring 154 so that when positioning peg 170 is received in peg recess 176, butt gap 168 is positioned adjacent vent groove gap 182. Thus, when butt gap 168 is expanded, fluid within duct 12 is prevented from leaking into vent groove 178 through butt gap 168 and is contained in flow path 16 (see Figure 6B).

Vent groove 178 may be selectably vented to a relatively low pressure, or pressurized with a relatively high pressure such as the valve inlet pressure, for example through a control vent 184. Vent groove 178 has a hole 186 formed therein connected to control vent 184. Control vent 184 may include any suitable mechanism for controlling the pressure in vent groove 178.

Control vent 184 is a two-stage valve for alternately connecting vent groove 178 to a relatively high pressure and a relatively low pressure. Control vent 184 suitably comprises a three-connection fixture 187 and a sealing element 188. A first port of fixture 187 is suitably connected to vent groove 178 through hole 186. A second port of fixture 187 is suitably connected to a relatively high pressure, such as the inlet or upstream pressure in duct 12. A third port is suitably connected to a relatively low pressure, such as ambient pressure. Sealing element 188 is disposed between the second and third ports to alternately connect the first port, i.e., vent groove 178, to either the second or third port, i.e., upstream or ambient, and seal the other port from the first port.

When sealing element 188 is in a first position (Figure 6A), vent groove 178 is subjected to upstream pressure through control vent 184, activating seal 150 to engage valve member 20 as described below. Conversely, when sealing element 188 is in a second position (Figure 6B), vent groove 178 is vented to a relatively low pressure through control vent 184, for example, ambient pressure or the downstream pressure in flow path 16, i.e., downstream from valve member 20.

After seal 150 expands radially outward away from valve member 20, fluid pressure and flow forces acting on valve member 20 may be used to reduce or eliminate opposing torque and to effect pivotal movement of valve member 20. Valve member 20 includes an actuator 30 (Figures 4A-B) for opening and closing valve member 20. Actuator 30 may comprise any actuator suitable for selectably pivoting valve member 20 between the open and closed positions. For example, actuator 30 suitably comprises a pneumatically controlled actuator for controlling the position of valve member 20. A suitable actuator is described in U.S. Patent Number 4,964,431 to Ball, et al., issued October 23, 1990. In the preferred embodiment, actuator 30 controls the extension and withdrawal of a plate-like partially arcuate vane member 82 in sliding juxtaposition with the downstream face of valve member 20. Vane member 82 defines an arcuate edge 84 which, in the first position of vane member 82, is disposed slightly inwardly of outer peripheral surface of valve member 20 (Figure 5A).

In operation of butterfly valve 10, pressurized fluid in flow path 16 applies static fluid pressure forces to a pair of wings 20', 20'' formed on valve member 20. Because vane member 82 is fully withdrawn, wings 20', 20'' are of equal area and disposed on opposite sides of the pivot axis defined by trunnions 26, 28. Because these static fluid pressure forces are applied to equal areas on each side of the pivot axis of valve member 20, valve member 20 is stable in the closed position as depicted in Figure 1.

When valve member 20 is in the closed position (Figure 4D), vent groove 178 is pressurized to contract sealing ring 154 around valve member 20. For example, control vent 184 may be connected to upstream pressure such that fluid flows into vent groove 178 (depicted by the flow arrows in Figure 6A) until the pressure in vent groove 178 is substantially equal to the pressure in flow path 16. Due to the location of the sealing ring 154 and valve member 20, the effective force exerted on the exterior surface of sealing ring 154 due to its exposure to upstream pressure in vent groove 178 is greater than the effective force exerted on the interior surface of sealing ring 154 exposed to upstream pressure in flow path 16. Consequently, the radially inward force exerted by the pressure in vent groove 178 upon the exterior surface of sealing ring 154 is greater than the radially outward force exerted by the pressure in flow path 16 upon the interior surface of sealing ring 154. As a result, sealing ring 154 is forced tightly against perimeter 86 of valve member 20.

Alternatively, the connection of control vent 184 to upstream pressure may be omitted, so that control vent 184 only connects or disconnects vent groove 178 to ambient pressure. When control vent 184 disconnects vent groove 178 from ambient pressure, leakage of a small amount of fluid from duct 16 (e.g., past wire 166) into vent groove 178 suitably pressurizes vent groove 178. The seal formed between valve member 20 and interior surface 14 of duct 12 and the seal formed between sealing ring 154 and sealing member groove 152 are preferably sufficient to facilitate such pressurization of vent groove 178.

To open butterfly valve 10, seal 150 is expanded away from perimeter 86 of valve member 20 before valve member 20 is rotated to the open position. Seal 150 is expanded by switching the position of sealing element 188 so that vent groove 178 is vented to a lower pressure, such as ambient pressure (Figure 6B). Depressurization of vent groove 178 reduces the inward force exerted upon the outer surface of sealing ring 154. Any leakage of upstream fluid into vent groove 178 is negligible in comparison to the net fluid flow vented to ambient pressure. As the inward force declines, it eventually drops below the outward force exerted upon the interior surface of sealing ring 154, causing sealing ring 154 to expand. Consequently, the interior surface of sealing ring 154 disengages outer perimeter 86 of valve member 20 and slides back into sealing member groove 152, effectively sealing vent groove 178 from fluid passing through valve 20 (described above in connection with vent groove gap 182).

Expanding seal 150 removes the frictional force from valve member 20, and further provides an initial fluid flow around the perimeter 86 of valve member 20. To pivot valve member 20 to the open position, actuator 30 extends vane member 20 beyond perimeter 86 of valve member 20 and into the fluid flow (Figure 4B). During this phase of valve operation, valve member 20 is subject not only to static fluid pressure forces, but to dynamic fluid flow forces as well. Extension of vane member 82 at its edge outwardly beyond peripheral surface 86 of valve member 20 effectively enlarges trailing wing 20'', while the area of leading wing 20' remains constant. In other words, the silhouette of valve member 20 is enlarged at trailing wing 20'' thereof. Thus, valve member 20 may be considered to act somewhat like a weather vane turning toward or away from the oncoming fluid flow in response to the fluid dynamic forces effective thereon. As a result, valve member 20 pivots to the open position.

In order to progressively close valve member 20 from its open position (Figure 4B) toward its closed position (Figure 4A), vane member 82 is retracted progressively, and valve member 20 pivots toward its closed position in response to fluid dynamic flow forces. When vane member 82 is fully retracted, valve member 20 pivots to its closed position.

In some applications or configurations, added torque may be required to open and close valve 10. A mechanical actuator may be provided to supply added torque to initially open valve member 20. For example, referring to Figures 1-3, actuator 30 may include a housing 32 having two oppositely extending piston members 38, 40, which expand and contract in opposition in response to pneumatic controls. First piston member 38 and second piston member 40 include cam-surfaces or wedge-surfaces 102, 108. Each wedge surface 102, 108 engages a recess 104, 110 formed in interior surface 14 of duct 12. First wedge-surface 102 is disposed opposite second wedge surface 108, and is engageable with a roller member 106 rotatably disposed in recess 104. Each recess 104, 110 is disposed downstream of valve member 20 when the latter is in the closed position, as depicted in Figure 1.

Pneumatic controls provide pressurized fluid, such as air, to piston members 38, 40, so that first piston member 38 retracts fully before second piston member 40 begins to extend. Consequently, first wedge surface 108 is first retracted to disengage from first roller member 112. Subsequently, second piston member 40 begins to extend, which forces second wedge-surface 102 against second roller member 106 to effect a counter clockwise opening torque on valve member 20. This opening torque is sufficient to pivot the valve member 20 through an initial opening angular increment toward the open position, i.e., to "crack open" the valve, and allow the beginning of fluid flow in flow path 16.

Subsequent to this initial opening movement of valve member 20, further inflow of pressurized fluid through actuator 30 causes second piston member 40 to further extend, causing vane member 82 to move outwardly against a pair of springs 90, 92. As described above, fluid dynamic forces effectively force valve member 20 to the open position. Referring now to Figure 3, vane member 82 is almost completely extended outwardly of trailing wing 20'' of valve member 20. Consequently, freely-pivotal valve member 20 has taken an angular position in the duct allowing substantially full fluid flow therein.

To progressively close valve member 20 from its open position of Figure 3 toward its closed position of Figure 1, the pneumatic pressure is progressively relieved from actuator 30. Consequently, vane member 82 is retracted progressively, and valve member 20 pivots toward the closed position in response to dynamic fluid flow forces. When the fluid pressure is completely relieved, valve member 20 may close to, but not completely in, the closed position of Figure 1. Second piston member 40 is completely retracted, and first piston member 38 is partially extended so that first wedge surface 108 engages first roller member 112. In order to completely close valve member 20, pressurized fluid is provided to a second port of actuator 30. This pressurized fluid extends first piston member 38 so that first wedge surface 108 engages first roller member 112, which provides a clockwise closing torque to valve member 20. This closing torque is sufficient to move valve member 20 to its fully closed position. At this time, valve member 20 and sealing ring 154 are positioned substantially as shown in Figure 4D.

Referring now to Figure 7, to eliminate friction between valve member 20 and seal 150, the activation of seal 150 must be coordinated with the movement of valve member 20. In particular, when valve 10 is in the closed position, collapsible seal 150 engages the outer perimeter 86 of valve member 20 to substantially seal perimeter 86 of valve member 20 to fluid (Figure 4A). To open butterfly valve 10, control vent 184 is configured to connect vent groove 178 to lower pressure, e.g., ambient pressure, (step 802). Collapsible seal 150 expands away from the perimeter 86 of valve member 20 to facilitate free movement of valve member 20. Actuator 30 then extends vane member 82 into the fluid flow path (step 804), causing valve member 20 to pivot to the open position (Figure 4B). To close valve 10, actuator 30 retracts vane member 82 (step 806) so that valve member 20 pivots to the closed position. When valve member 20 is in the closed position, control vent 184 is configured to connect vent groove 178 to high pressure, e.g., upstream pressure, (step 808). Pressurized fluid in fluid path 16 is transmitted into vent groove 178 through control vent 184 so that sealing ring 154 is secured around valve member 20. The process then repeats as necessary to open and close valve 10 (step 810).

The process for controlling valve 10 may be implemented by a mechanical system. Referring to Figure 8, a mechanical control system 900 suitably comprises a vane member actuator 902, depicted as a gear connected to an axis of rotation of vane member 82; control vent 184; and a driver 904. Driver 904 may comprise any mechanism for transceiving signals, e.g. electrical, mechanical, or manual, and driving vane member actuator 902 and control vent 184 accordingly. For example, driver 904 is a pneumatic system including a piston responsive to pneumatic signals. As the pressure input to the piston (P_{ref}) changes with respect to the pressure downstream of valve member 20 in duct 12 (P_{d/s}), the position of a slide member 906 changes accordingly. The translative motion of slide member 906 drives vane member actuator 902 and control vent 184.

Control vent 184 is responsive to driver 904. When driver 904 is activated, control vent 184 alternately connects vent groove 178 to high or low pressure accordingly. When control vent 184 is a first position, vent groove 178 is vented to ambient pressure (P_{amb}); conversely, when control vent 184 is in a second position, vent groove 178 is pressurized by fluid in flow path 16 via control vent 184. Control vent 184 comprises any suitable mechanism responsive to driver 904 for venting vent groove 178. For example, control vent 184 may comprise a valve directly responsive to translational motion of slide member 906. As slide member 906 moves to the left, in Figure 8, control vent 184 vents to lower pressure (P_{amb}). Control vent 184 remains connected to the lower pressure until slide member 906 returns to the right, at which point control vent 184 switches to connect to high pressure (P_{u/s}).

Vane member actuator 902 is similarly responsive to driver 904 such that when driver 904 is activated, vane member actuator 902 responds by extending or retracting vane member 82. Vane member actuator 902 may include any mechanism configured to extend and retract vane member 82. For example, vane member actuator 902 suitably comprises a pneumatically driven piston as described above with respect to Figures 1-3. Alternatively, vane member actuator 902 comprises a gear meshing with teeth on slide member 906 such that translational motion of slide member 906 turns the gear and extends or retracts vane member according to the direction of slide member's 906 motion.

Mechanical control system 900 is suitably configured to include a "dead band" in which, for a predetermined time or amount of motion, either vane member actuator 902 or control vent 184 does not respond to activation of driver 904. For example, when driver 904 is activated to open valve member 20, vane member actuator 902 retains vane member 82 in its current position for a predetermined interval, e.g., for a full revolution of the gear. In the meantime, control vent 184 responds immediately and opens to expand seal 150. Vane member actuator 902 then extends vane member 82 to open valve member 20. Conversely, when driver 904 is activated to close valve member 20, vane member actuator 902 responds immediately by retracting vane member 902 while control vent 184 remains open. When vane member 86 is retracted and valve member 20 is fully closed, control vent 184 is connected to high pressure and seal 150 is secured to valve member 20. Thus, mechanical control system 900 effectively implements the control logic of Figure 7.

In sum, the control logic to control collapsible seal 150 facilitates sealing of butterfly valve 10 in the closed position. Collapsible seal 150 is expanded away from valve member 20 before moving valve member 20 to minimize friction between valve member 20 and seal 150, thus reducing wear. Likewise, collapsible seal 150 is secured against valve member 20 only after valve member 20 has been rotated to the closed position, similarly minimizing friction and reducing wear on seal 150.

While the principles of the invention have now been made clear in illustrative embodiments, there will be immediately obvious to those skilled in the art many modifications of structure, arrangements, proportions, the elements, materials and components, used in the practice of the invention which are particularly adapted for a specific environment and operating requirements without departing from those principles.

## Claims

1. A butterfly valve, comprising:
a duct defining a flow path;
a valve member disposed within said duct, said valve member being movable between a closed position and an open position;
a movable seal disposed between said duct and said valve member, said seal comprising a sealing ring having a butt gap formed therein, said seal selectably configurable to engage and disengage said valve member; and
a control system configured to control said valve member and said seal, wherein said control system is configured to move said seal to engage and disengage said valve member.

2. The butterfly valve of claim 1, wherein said control system includes:
a seal actuator configured to control said seal;
a valve member actuator configured to control said valve member; and
a driver configured to control said seal actuator and said valve member actuator and coordinate the motion of said seal with the motion of said valve member.

3. The butterfly valve of claim 2, wherein said driver implements a dead band so that said seal actuator and said valve member actuator operate consecutively.

4. The butterfly valve of claim 2, wherein said valve actuator includes a vane member disposed on said valve member, and wherein said vane member is moveable into said flow path of said duct.

5. The butterfly valve of claim 1, wherein said duct includes a sealing member groove, and wherein said seal is movably disposed within said sealing member groove.

6. The butterfly valve of claim 5, wherein said duct further includes a vent groove adjacent said sealing member groove, and wherein said vent groove is selectably pressurized to bias said sealing ring toward said valve member when said valve member is in said closed position.

7. The butterfly valve of claim 6, wherein said vent groove is selectably pressurized by fluid from said flow path.

8. The butterfly valve of claim 6, wherein said control system includes a control vent connected to said vent groove, wherein said control vent is configured to selectably depressurize said vent groove.

9. The butterfly valve of claim 1, wherein said sealing ring includes a sealing surface abutting said valve member when said valve member is in said closed position, and wherein said sealing surface conforms at least partially to the contour of said valve member.

10. The butterfly valve of claim 1, wherein said valve member is configured to be biased toward said closed position by said fluid flowing in said flow path.

11. The butterfly valve of claim 2, wherein said valve member actuator further comprises a mechanical actuator disposed between said valve member and said duct, wherein said mechanical actuator is configured to provide initial torque for moving said valve member to said open position.

12. The butterfly valve of claim 6, wherein said vent groove includes a gap adjacent said butt gap.

13. The butterfly valve of claim 8, wherein said control vent depressurizes said vent groove to a ambient pressure outside of said duct.

14. The butterfly valve of claim 8, wherein said control vent depressurizes said vent groove to a downstream pressure in said flow path in said duct.
